# EUROPEAN PATENT APPLICATION

(11) **EP 1 229 721 A2**
(43) Date of publication of application: **07.08.2002**
(21) Application number: 02250688.5
(22) Date of filing: 31.01.2002
(51) Int. Cl.: H04N 1/00

(54) **Information displaying method and menu service method and system**

(30) Priority: 31.01.2001 JP 2001024287; 31.01.2001 JP 2001024290
(71) Applicant: FUJI PHOTO FILM CO., LTD., Kanagawa (JP)
(72) Inventor: Watanabe, Yoshiaki, Asaka-shi Saitama (JP); Terada, Masahiro, Asaka-shi Saitama (JP)
(74) Representative: Stevens, Jason Paul

(57) **Abstract**

A particular-information displaying method according to the present invention comprises the steps of causing a user's communication device (16) to transmit particular identification information to a first server (20), causing the first server (20) to transmit an image of a service button (28) or banner advertisement to the user's communication device (16), the service button (28) or banner advertisement corresponding to the received particular identification information, causing the user's communication device (16) to receive the image data, and causing the user's communication device (16) to display the received image of the service button (28) or banner advertisement on the image viewer displayed on the display device (22). Thus, software such as the image viewer can be easily and reliably customized, and an image of the service button (28) or banner advertisement instructing any of various services to be carried out can be easily customized for display on the display device (22) of the user's communication device (16). Further, the user obtains a shop ID from a service company using a digital camera (112) having a short-distance communication function while he or she is out, and transmits the shop ID from a client computer (110) to a menu server (120). The menu server (120) transmits menu button information corresponding to the received shop ID to the client computer (110). Upon receiving this menu button information, the client computer (110) displays menu buttons (151) on a display (150) so as to access a service server (130) of the corresponding service company on the basis of operation of the menu buttons (151). A menu server operation company administering the menu server (120) bills service companies desiring to register their menu buttons (151). Thus, the user can easily obtain information on the service company in which he or she is interested. Further, each service company can efficiently provide information only to target users. Furthermore, profits obtained by the service company can be reliably billed.

## Description

The present invention relates to a particular-information displaying method, and in particular, to a particular-information displaying method wherein when a service such as the distribution of image or sound information or the delivery of printed matter is to be carried out through a communication network, a customized image of a service button or banner advertisement which instructs any of various services to be executed are displayed on a display device of a user's communication device. Further, the present invention relates to a menu service method and system which provides an Internet user with menu button information required to access a service server of a service company and which charges the provision of the menu button information to the service company.

A communication service has been known in which software recorded on a CD-ROM attached to an electronic camera upon purchase is introduced into a user's personal computer so that the computer can be connected to a server of a service center or the like for communication, the server residing on a network such as the Internet. This communication service can be used to transmit images photographed using the electronic camera to the server of the service center in order to receive a service such as an order for the printing of images or the like.

Such attached software used for an order for a service or the like is designed and packaged for general purposes so that every user can enjoy a similar service regardless of the shop at which he or she bought the electronic camera as long as the shop is located within his or her country.

However, major volume-sale shops and camera shops which sell the electronic camera desire to customize the software attached to the electronic camera so that users who bought the camera can use the shop to easily order the printing of images.

These shops also desire to contract with a predetermined service center (service company or the like) so that each shop can charge predetermined prices for print orders made by users of the shop even if the users place the orders with the service center, or contract with the service center so that orders from users of the shop can be discounted under predetermined conditions.

In general, for customization of software attached to electronic device such as an electronic camera supplied by an OEM is sold, the maker often adapts the original software for the custom specification and then packages the adapted software beforehand. However, it is actually difficult for the maker to create unique software for each of a large number of shops and mold and package CD-ROMs.

In recent years, the popularization of the Internet has enabled users to easily retrieve various information and view the contents of the information. Further, service companies can disclose information to an unspecified large number of Internet users by installing their WWW sites, and can conduct commercial transactions such as the Internet shopping on the sites.

However, to obtain required information which is provided by a service company, users must know and input the location at which the information is stored (that is, URL (Uniform Resource Locator)), must access from another linked site, or must retrieve it using a retrieval service. This operation is cumbersome.

On the other hand, it is impossible for the service company to provide the information only to target users, for example, those who have visited a shop run by the company. Accordingly, the service company fails to efficiently provide Internet services to the target users to achieve marketing.

The present invention is provided in view of these circumstances, and it is an object thereof to provide a particular-information displaying method wherein when software such as an image viewer which is attached to electronic device such as an electronic camera is customized for each shop, this customization is easily and reliably carried out by incorporating additional information from separate medium into the software, without the need to change the maker's product package.

It is another object of the present invention to provide a particular-information displaying method wherein even if a method of customizing, for each shop, software attached to electronic device such as an electronic camera is made well known, only the shops already approved of by a service center or an electronic camera maker are allowed to customize the software so that the software such as an image viewer cannot be customized without a concluded contract.

It is yet another object of the present invention to provide a menu service method and system which allows users to easily obtain information on a service company in which the users are interested, allows the service company to efficiently provide information only to such target users, and allows profits obtained by the service company to be charged.

To attain these objects, one aspect of the present invention is directed to a particular-information displaying method of receiving image data on a service button or banner advertisement from a first server and displaying the image data on a user's communication device, the service button or banner advertisement allowing the user to instruct any of various services such as image printing and image or sound uploading to be carried out, the method comprising the steps of: causing the user's communication device to transmit particular identification information to a first server, the information being used to display, on a display device of the user's communication device, the service button or banner advertisement instructing a particular service to be carried out; causing the first server to transmit image data on the service button or banner advertisement corresponding to the particular identification information to the user's communication device upon receiving the particular identification information from the user's communication device; causing the user's communication device to receive the image data on the service button or banner advertisement from the first server; and causing the user's communication device to display an image of the service button or banner advertisement on an image viewer displayed on the display device, on the basis of the received image data on the service button or banner advertisement.

This aspect of the present invention comprises the steps of causing the user's communication device to transmit the particular identification information to the first server, causing the first server to transmit the image of the service button or banner advertisement to the user's communication device, the service button or banner advertisement corresponding to the received particular identification information, causing the user's communication device to receive the image data, and causing the user's communication device to display the received image of the service button or banner advertisement on the image viewer displayed on the display device, thereby enabling software such as the image viewer to be easily and reliably customized.

To attain the above objects, another aspect of the present invention is directed to a menu service method, comprising the steps of: causing a user's portable terminal and/or a client computer to transmit identification information on a service company to a menu server; causing the menu server to transmit menu button information corresponding to the received identification information on the service company, to the client computer; causing the client computer, which has received the menu button information, to display menu buttons on a display in accordance with the menu button information on the basis of a predetermined client application so as to access a service server of the corresponding service company on the basis of operation of the menu buttons; and causing a menu server operation company administering the menu server to bill the service company.

That is, the user transmits the identification information on the service company to the menu server to obtain the menu button information used to access the service server of the service company from the menu server. The user can operate the menu buttons displayed on the display on the basis of the menu button information obtained, to easily access the service server of the corresponding service company. Thus, the service company can efficiently provide information only to users who have obtained the menu button information, and the menu server operation company can bill service companies desiring to register their menu buttons therewith.

Preferably, the client computer transmits a request for counting of the number of accesses to the service company corresponding to the menu buttons, to the menu server on the basis of operation of the menu buttons. Preferably, each time the menu server receives the request for the counting of the number of accesses to the service company, from the client computer, the menu server counts up the number of accesses to the service company, and the menu server operation company bills the service company on the basis of the number of accesses.

Preferably, the identification information on the service company is transmitted from the service company's communication device to the user's portable terminal by short-distance radio communication, and is transmitted from the portable terminal to the menu server directly or via the client computer. Thus, when the user visits a shop or the like of the service company carrying his or her portable terminal, he or she can automatically collect the identification information on the service company.

Preferably, the identification information on the service company is manually input using an input device of the user's portable terminal and transmitted directly to the menu server using a communication function of the portable terminal, or is manually input using an input device of the client computer and transmitted from the client computer to the menu server. That is, when the user comes across a notice showing the identification information on the service company while he or she is out, he or she may input the identification information on the service company.

Preferably, when a menu update button displayed on the display is operated on the client computer on the basis of the client application, the client computer transmits the identification information on the service company to the menu server.

Preferably, the menu server administers, for each user, menu button information corresponding to the identification information on the service company. When the menu update button displayed on the display is operated on the basis of the client application to receive a menu update request together with the user's identification information, the menu server transmits menu button information corresponding to the user to the user's client computer.

Further, another aspect of the present invention is directed to a menu service system, comprising: a client computer; and a menu server of a menu server operation company, wherein: the client computer has a function of transmitting identification information of a service company input manually or from a portable terminal on the basis of a predetermined client application, to the menu server, a function of displaying menu buttons on a display on the basis of the menu button information received from the menu server, a function of accessing a service server of a corresponding service company on the basis of operation of the menu buttons displayed on the display, and a function of notifying the service server of the service company of the identification information on the service company upon each access to the service server of the service company, the menu server has a function of transmitting, to the client computer, menu button information corresponding to the identification information on the service company received from the client computer, a function of counting the number of access notifications from the client computer for each service company to manage the number of accesses, and the menu server operation company administering the menu server bills the service company on the basis of the number of accesses.

Preferably, the menu service system has a radio communication function of executing short-distance radio communication with communication device of the service company to receive the identification information on the service company, and a function of inputting the received identification information on the service company to the client computer.

Preferably, when a menu update button displayed on the display is operated on the basis of the client application, the client computer transmits the identification information on the service company, user identification information, and a menu update request to the menu server.

Preferably, the menu server has a function of managing, for each user, the menu button information corresponding to the identification information on the service company, and upon receiving the user identification information and the menu update request, transmits menu button information corresponding to the user, to the user's client computer.

The nature of this invention, as well as other objects and advantages thereof, will be explained in the following with reference to the accompanying drawings, in which like reference characters designate the same or similar parts throughout the figures and wherein:
Fig. 1 is a view showing the configuration and connection form of a service system used by a user to transfer images to a server;
Fig. 2 is a view showing the flow of information transmitted and received between an electronic camera and a service center;
Fig. 3 is a view showing a display screen of an image viewer displayed on a display device of a personal computer;
Fig. 4 is a view showing the configuration of a service system which transmits user set information input by a user and identification information unique to the electronic camera;
Fig. 5 is a view showing an example of the operation of the service system according to the present invention;
Fig. 6 is a view showing an example of information transmission in a particular-information displaying method according to the present invention;
Fig. 7 is a view showing an arrangement of instruction buttons displayed on the image viewer in their initial state;
Fig. 8 is a view showing the arrangement of the instruction buttons displayed on the image viewer after customization;
Fig. 9 is a schematic view of a menu service system according to the present invention; and
Fig. 10 is a view showing a display screen of the image viewer displayed on a display of a client computer, shown in Fig. 9.

Preferred embodiments of a particular-information displaying method according to the present invention will be described below with reference to the attached drawings.

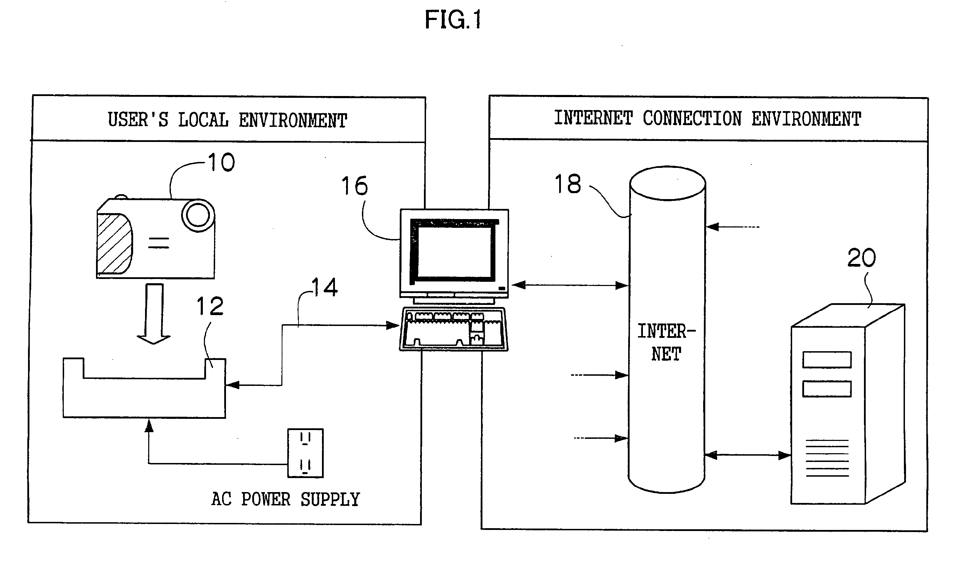

Fig. 1 is a view showing the configuration and connection form of a service system used by a user to transfer information such as images to a server.

As shown in this figure, the service system is composed of an electronic camera 10 which can record identification information unique to electronic device such as a camera, user set information, and photographed images or concentrated sounds and which comprises a communication device which can transmit the recorded information to separate communication device, a cradle 12 as junction device which is connected to the communication device of the electronic camera 10 to supply power to the electronic camera 10, a personal computer 16 comprising a communication device which can transmit and receive information such as images to and from the cradle 12 via a communication device 14 such as a USB (based on the Universal Serial Bus communication standards) and which can transmit and received information such as images to and from a server or a service center via a communication network, the personal computer acting as the user's communication device, and a service center 20 such as a server which can transmit and receive information such as images or sounds via a communication network such as the Internet 18.

With the service system constructed as described above, the electronic camera 10 can transmit and receive information such as images to and from the service center 20 via the personal computer 16. The cradle 12 replaces a power supply connector and an interface connector of the personal computer 16 with a higher connector to simplify operations performed by the user.

The electronic camera 10 comprises an image pickup device which picks up an image of a subject, a recording device which has images and sounds recorded thereon, and a communication device which transmits and receives information to and from separate communication device. Further, the personal computer 16 (the user's communication device) comprises a device which reads communication software recorded on a CD-ROM or the like attached to the electronic camera 10 and executes a process based on the read software, a communication device which transmits and receives information to and from the electronic camera 10, a communication device which can transmit and receive information such as image data and particular identification information to and from the communication network such as the Internet 18, a display device which displays identification information on each image and sound to the user and displays information such as a service menu provided by each service center 20 or the like and banner advertisements, a selection device which selects the user's desired images or sounds from the displayed identification information on the images or sounds, a selection device (service buttons, shop service buttons, or the like) which selects the user's desired service from the displayed information such as the service menus, and a recording device which has various execution programs and information recorded thereon.

Further, the server such as the service center 20 comprises a communication device which transmits and receives various information to and from the communication network such as the Internet 18, a recording device which has identification information unique to the electronic camera 10 and information associated with the identification information recorded thereon, the latter information including user set information, usage information, service menu information provided to the user, a password, a method by which the user of the electronic camera 10 pays for the service, image data on service button or banner advertisement, and particular identification information recorded in connection with the image data, an extracting device which extracts any of the above various information on the basis of the identification information unique or specific to the electronic camera 10, a checking device which checks the password to permit or reject the provision of a service, a pay information recording device which has the identification information unique to the user owned electronic camera 10 and the method by which the user pays for the service, recorded in connection with each other, pay information extracting device which extracts the method by which the user pays for the service, from the pay information recording device on the basis of the identification information unique to the electronic camera 10, a payment receiving device which receives the payment for the service provided to the user, in accordance with the selected charge paying method, and a determining device which determines the display priorities of a plurality of services provided to the user, on the basis of the user's service usage information.

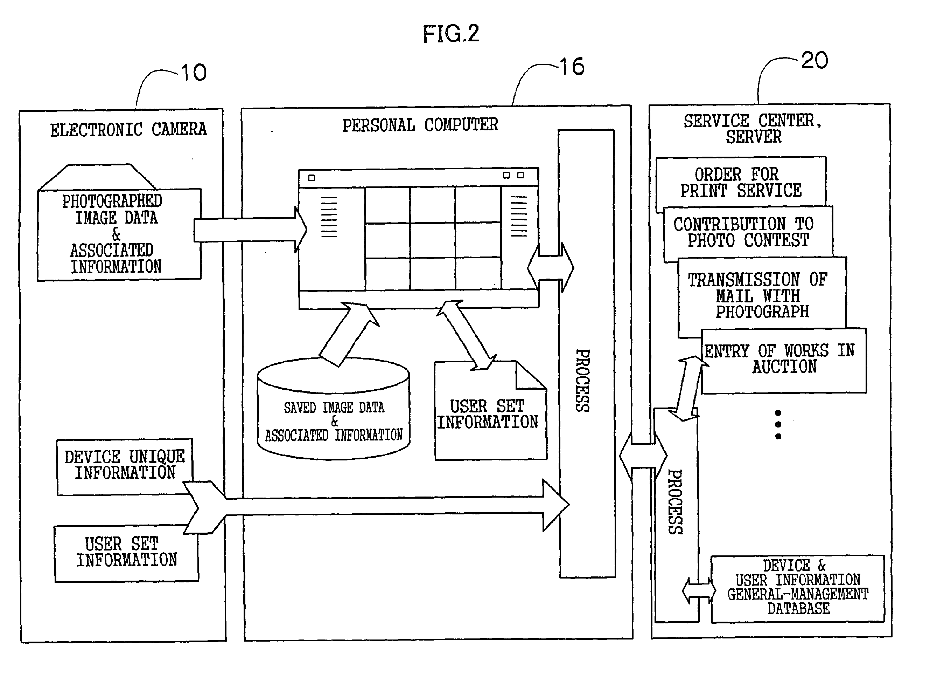

Fig. 2 shows the flow of information transmitted and received between the electronic camera and the service center.

In this figure, the electronic camera 10 can transmit photographed image data and associated information therefor, identification information unique to the device such as the manufacture number or ID of the electronic camera 10, and user set information such as an address and a credit card number which can be customized by one user, to the personal computer 16 via the communication device 14.

When a recording medium such as a CD-ROM which is attached to the electronic camera 10 is installed in the personal computer 16, a state can be set in which the personal computer 16 can read out an image viewer or communication software recorded on the recording medium, and activate the read software such as the image viewer.

When the electronic camera 10 is inserted into the cradle 12, the personal computer 16 automatically detects (using a plug & play function) connection to the electronic camera 10 via the communication device such as the USB and automatically activates the image viewer, application software which lists the images in the electronic camera 10. For example, to automatically detect connection to the electronic camera 10, a device driver which automatically detects connection to the electronic camera 10 upon or after the activation of a system program for the personal computer 16 is incorporated in the personal computer 16 to monitor a plug & play event in the communication system. When the device driver recognizes the connection to the electronic camera 10, it activates a required process program such as the image viewer depending on the process mode of the electronic camera 10.

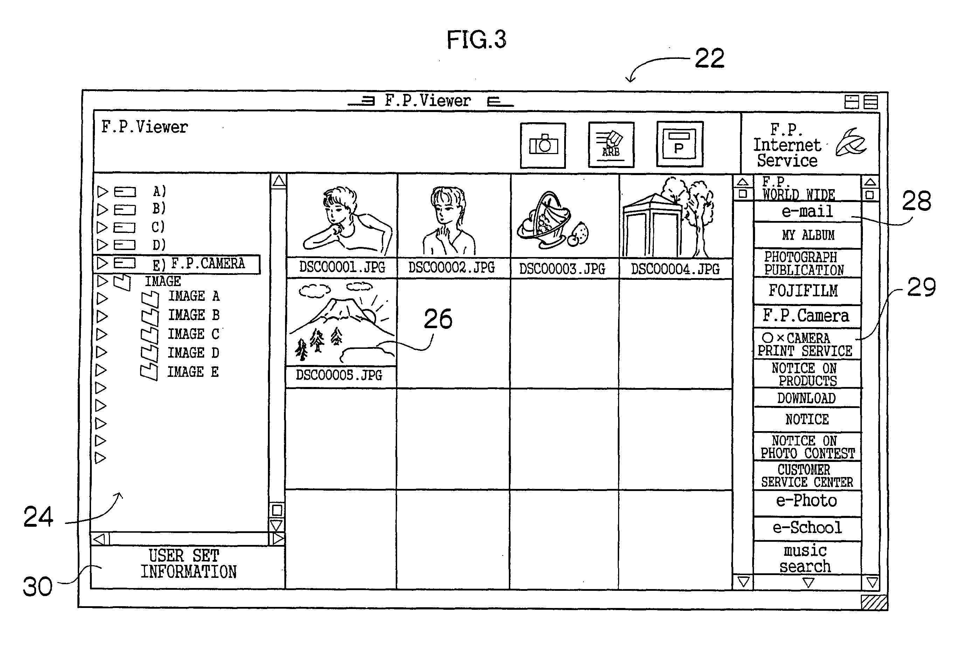

Fig. 3 shows a display screen of the image viewer displayed on the display device of the personal computer.

A display screen 22 (the display device of the personal computer 16) displayed by the image viewer simultaneously shows, for example, identification information for the photographed image data and associated information recorded on the recording medium of the electronic camera 10, a file list 24 containing identification information indicative of the names of folders and files for saved image data and associated information recorded in a database of the personal computer 16, a list of thumbnail images (identification information) of the images recorded in a folder which is specified for viewing by the user, instruction buttons 28 (selection device) which display a menu of various services and instruct the personal computer to be connected to the service center 20 carrying out the corresponding service, a shop service button 29 that instructs, for example, the shop which sold the electronic camera 10 to provide its print service, a user set information button 30 which allows the user to check or modify the user set information, and banner advertisements (not shown).

Further, if the folder specified for viewing records only sound information thereon, only a service menu of service centers 20 concerning sounds such as music sites is displayed. On the other hand, if the folder records only image information or the electronic camera 10 has no sound reproducing function (a menu is selected on the basis of the information on the electronic camera 10 recorded in the server of the service center 20 in connection with the received identification information unique to the camera, and is then returned to the personal computer 16 for display), then only a service menu of service centers 20 relating to images is displayed with no unwanted information displayed so as to minimize the choices for the user.

The user uses the input device (selection device) represented by a mouse or keyboard to select one or more desired images from the displayed list of file names or thumbnail images 26, and depressing any of the instruction buttons 28 (a service selecting device including the shop service button 29 which causes a print service to be executed, a photograph publication button, a photo contest contribution button, and other service buttons) which instructs connection or transmission to any of the various service centers 20 to be established or executed, the user can transmit print service information on the desired images, receive the service with which his or her photographs are published on the Internet, or upload an image or sound file to contribute to a photo contest.

The images and sounds selected as described above and the information on the service to be executed by the service center 20 are linked together in the application program of the image viewer and transmitted to the service center 20 specified with the instruction buttons 28 or the shop service button 29 or to a service center 38 for a "BG Service", described later. If the personal computer 16 and an associated provider on the Internet or the like are connected together via a public telephone line, when the user selects the images or sounds and the service center 20 or 38, the personal computer 16 dials up the provider on the Internet or the like and starts communication therewith. Then, the personal computer transmits information on the IP address or domain name of the service center 20 to be connected, information on the IP address or domain name assigned to the personal computer 16, the information on the desired service, the data on the selected images and sounds, and the identification information unique to the electronic camera 10.

Upon receiving the IP address or domain name of the transmitting personal computer 16, the service information, the data on the images and sounds, and the identification information unique to the electronic camera 10, the service center 20 transmits information on a predetermined operation screen (information on the optimum service menu corresponding to the identification information unique to the electronic camera 10, information on the optimum service menu recorded in connection with the identification information unique to the electronic camera 10 and information on the past usage of the service center 20 or server site, and information on a service menu for home pages of the service center 20 located in hierarchies deeper than its top page directly) to the personal computer 16 on the basis of the received service information.

When the service center 20 or 38 requires information on the destination of its products and payment information, for example, if the user has instructed an image print service to be carried out, then the personal computer 16 receives the device unique information on the electronic camera 10 inserted into the cradle 12 (unique information such as the serial manufacture number or ID of the electronic camera 10), and automatically transmits this information to the service center 20 or 38.

Further, upon purchasing the electronic camera 10, the user registers the user set information in the electronic camera 10, including information on the name and address of the user of the electronic camera 10, information on the destination of products to be delivered to the user, information on the destination of the user's images or sounds, information on the financial source of payment by the user, information on the password identifying the user, and information on the user's sex, birth date, and age. Then, during user registration or the like, this information is transmitted to the service center 20 or 38 together with the serial manufacture number unique to the purchased electronic camera 10. Both pieces of information may be associated with each other and managed by the service center 20 so that upon receiving the image information and the identification information unique to the electronic camera 10, the service center 20 can read out, on the basis of the identification information unique to the electronic camera 10, the user information such as the user's address and name which is recorded in connection with the unique identification information and can use the readout information for the delivery of products and for payment. In this case, the electronic camera 10 is used as an authentication device.

Further, to avoid such an inconvenient situation that if a person different from the user having purchased the electronic camera 10 operates the electronic camera 10 to receive various services, the services are charged to the purchaser of the electronic camera 10, who has not actually received the services, the service center 20 may request this person to submit the authentication password which identifies the user if the user is to pay for the services. In this case, before the user starts to use the electronic camera 10, the service center 20 receives the user set information including the identification information unique to the user owned electronic camera 10 and the user's password and records these pieces of information on the recording device in such a manner as to associate them with each other.

Then, when the identification information unique to the electronic camera 10 and the password input by the user are received from the user, the checking device reads out the password recorded on the recording device in connection with the identification information unique to the electronic camera 10, and checks this password against the password input by the user. If the result of the check indicates that the password previously recorded on the recording device is the same as the password input by the user, the service center permits and executes the provision of a service such as the distribution of the images or sounds specified by the user or the delivery of printed matter specified by the user. As information on the address of the destination of the products, the information on the address is used which is contained in the user set information previously recorded on the recording device in connection with the received identification information unique to the electronic camera 10. Further, if the user set information contains the method by which the user pays for the various services provided by the service center 20 (if the method is recorded on the payment information recording device), the payment information extracting device extracts the charge paying method described in the user set information recorded in connection with the identification information unique to the electronic camera 10. Then, on the basis of the charge paying method and the result of the password check, the payment receiving device of the service center 20 receives the payment.

The information on the operation screen transmitted and notified of to the personal computer 16 by the service center 20 may be in the form of a default general-purpose operation screen, or the contents of the operation screen may be changed on the basis of usage information such as the user's use frequency or usage history. To change the operation screen, the usage information on the frequency with which the user has used the service center 20 or the contents of the usage may be sequentially recorded on the recording device in connection with the identification information unique to the electronic camera 10 received from the electronic camera 10 via the personal computer 16 so that upon receiving the identification information unique to the electronic camera 10, the service center can select information useful for the user from the usage information on plural types of service centers 20 recorded on the recording device on the basis of the current usage information and the usage information on the use frequency and usage contents stored in the recording device or can notify the personal computer of the latest customized operation screen. Further, display priorities may be changed so as to give higher priority to more frequently used service centers 20 on the basis of the usage information recorded in connection with the identification information on the electronic camera 10, or more frequently used service centers 20 or the shop service button 29 for the shop at which the electronic camera 10 was purchased may be displayed at such a location that the user can select the corresponding button easily.

When the usage history information unique to the user and the information unique to the electronic camera 10 are thus recorded in such a manner as to be associated with each other, even if, for example, an electronic camera a owned by a user A and an electronic camera b owned by a user B use the same personal computer 16 to access the same image service center 20, an operation screen and advertisement information suitable for the user A is provided to the user A on the basis of the identification information unique to the camera a, while an operation screen and advertisement information suitable for the user B is provided to the user B on the basis of the identification information unique to the camera b. Accordingly, different operation screens can be displayed to these users, thereby providing careful services depending on the user.

Further, for the display of the image viewer operating on the personal computer 16, the information unique to the electronic camera 10 may be obtained and transmitted to the image service center 20 or the server of the shop (BG Server service center 38) for an inquiry. Then, the image service center 20 or 38 may transmit information on the display of a service menu to the personal computer 16 on the basis of the usage history information recorded in connection with the information unique to the electronic camera 10, so that the image viewer displays the service menu on the basis of the received display information.

Alternatively, the user may transmit identification information unique to the electronic camera 10, status information for the electronic camera 10, and history information on the usage of the electronic camera 10 to the service center 20 or 38 which provides after-sale services. Then, the service center 20 or 38 may transmit after-sale service information such as update information for an operational program for the electronic camera 10 recorded in connection with the received identification information unique to the electronic camera, and camera after-sale service information such as update information for the operation program for the electronic camera 10 recorded in connection with the status information for the electronic camera 10 and the history information on the usage of the electronic camera 10, to the electronic camera 10 via the personal computer 16.

When the service center thus communicates with the electronic camera 10 online, the service center 20 or 38 can easily and adequately understand an inconvenient situation without the need to bring the electronic camera 10 to a shop or a repair shop, and can adequately determine how to repair the camera and execute this repair.

Further, for the payment of customer service charges such as repair costs, payment may be received from the user in accordance with the information on the method by which the user pays to the service center 20 or 38 which is contained in the user set information which is recorded on the recording device in connection with the received identification information unique to the electronic camera 10.

After the electronic camera 10 has been sold, if the operation process program for controlling photographing, display, or the like is updated and changed to a new program, the user can transmit the identification information unique to the electronic camera 10 to the service center 20 or 38, which can thus read out the type of the electronic camera 10 or information on the past usage of customer services recorded on the recording device in connection with the identification information unique to the electronic camera 10 and then transmit an appropriate operation process program to the electronic program 10 for updating. Further, if the electronic camera 10 fails and operates improperly, the service center 20 or 38 can read out the information recorded in connection with the identification information unique to the electronic camera 10 to appropriately troubleshoot the camera.

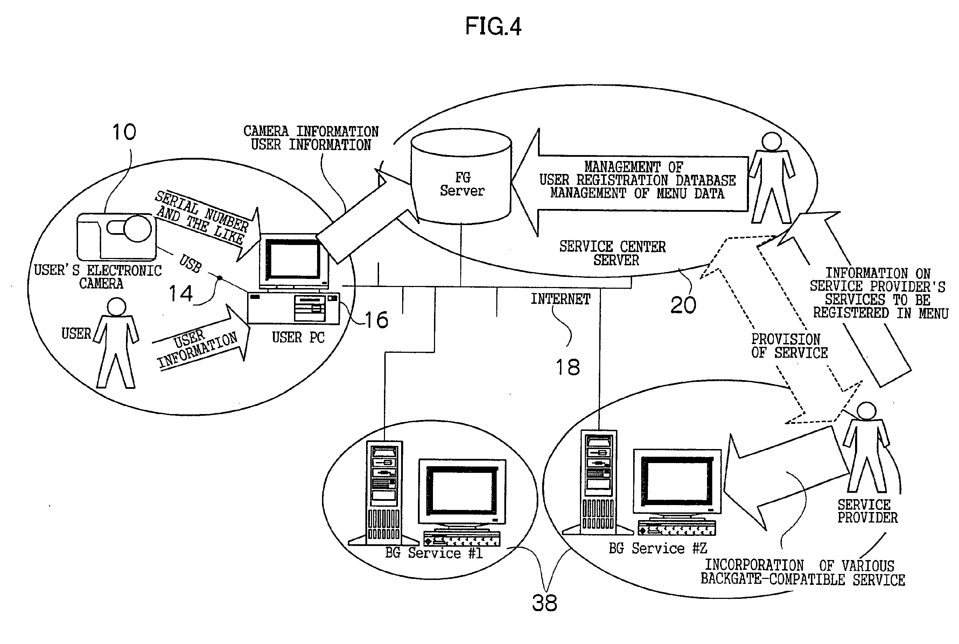

Fig. 4 is a view showing the configuration of a service system which transmits the user set information and the identification information unique to the electronic camera 10.

As shown in this figure, the user owned electronic camera 10 transmits the identification information such as a device unique serial number to the personal computer 16. Further, the user inputs the user set information to the personal computer 16. The identification information unique to the electronic camera 10 and the user set information are transmitted from the personal computer 16 to an "FG Server" service center 20 via the communication network such as the Internet 18. The "FG Server" receives, from the service provider, service menu information on various services and information on the service provider's services, and records the user set information, the identification information unique to the electronic camera 10, and the menu data in such a manner as to associate them with each other.

Alternatively, the service provider may incorporate various services in the "BG Service" service center 38. The "BG Service" service center 38, including the corresponding shop, delivers prints or images or sounds to the user.

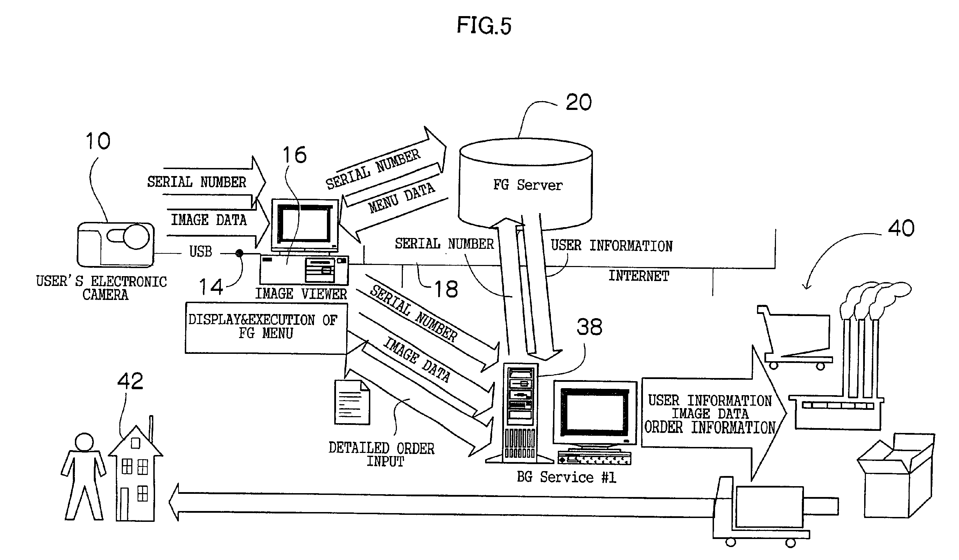

Fig. 5 shows an example of the operation of the service system according to the present invention.

In this figure, when the user owned electronic camera 10 is connected to the communication device 14, the program for the image viewer is automatically activated on the personal computer 16, and starts to connect to the communication network such as the Internet 18. The personal computer 16 transmits the identification information unique to the electronic camera 10 to the "FG Server" via the Internet 18. The "FG Server" extracts service menu information on an appropriate service recorded in connection with the received identification information unique to the electronic camera 10 and transmits this information to the personal computer 16.

When the information such as the service menu is displayed on the image viewer, the user selects the desired images or sounds and the desired service and instructs the service to be executed. The thus selected detailed service order information and the identification information unique to the electronic camera 10 are transmitted to the "BG Service" service center 38 via the Internet 18. The "BG Service" service center 38 transmits the received identification information unique to the electronic camera 10 to the "FG Server" service center 20, and requests the "FG Server" to transmit the user set information. The "FG Server" receives the identification information unique to the electronic camera 10, and transmits the user set information such as the user's address to which articles are to be delivered, to the "BG Service" service center, the user set information being recorded in connection with the identification information.

Upon receiving the user set information, the "BG Service" service center transmits the received user set information and for example, data on the images to be printed and detailed information on the print service, to a delivery service center 40 or the like. Upon receiving these pieces of information, the delivery service center 40 prints the images in accordance with the detailed order information and then delivers the printed matter to the destination (user's home 42) described in the user set information.

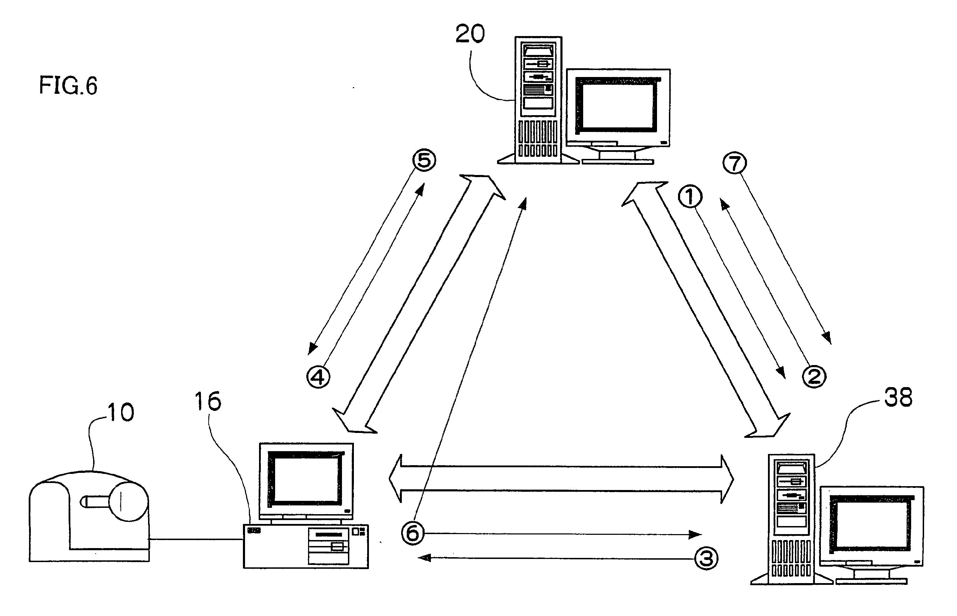

Fig. 6 shows an example of information transmission in a particular-information displaying method according to the present invention.

As shown in this figure, the user's personal computer 16, the service center 20 (first server) such as the "FG Server", and the service center 38 (second server) of the shop or the like are connected together via the communication device such as the Internet 18 to transmit and receive information therebetween.

First, an explanation will be given of a process required to display, on the image viewer, the shop service button 29 used to instruct the service center 38 to execute its service.

The service center 38 of the shop or the like contracts with the service center 20 "FG Server" for the display of the shop service button 29 so that the shop service button 29 or banner advertisement used to link to the service center of the shop is displayed on the display screen 22 of the user's personal computer 16, which displays the image viewer shown in Fig. 3.

If both service centers agree on this contract, the service center 20 transmits, to the service center 38, button identification information (particular identification information) required to display data on a design of the shop service button 29, banner advertisement, or the like on the display screen 22 of the user's personal computer 16 ((1) in Fig. 6). Furthermore, information such as the storage capacity (storage area) required to store the shop service button 29 or the like in the storage device (such as a hard disk) of the service center 20 may be communicated to the service center 38 as required.

Then, the service center 38 transmits the data on the design of the shop service button 29 or banner advertisement (design data of a predetermined capacity or less if the storage capacity is specified) to the service center 20 ((2) in Fig. 6).

At this time, under the contract, the service center 20 may charge the display of the shop service button 29 to the service center 38, or may charge it to the service center 38 only when the user actually receives a service from the service center 38, or may charge nothing to the service center 38.

Then, the service center 38 delivers, to the user, a product to be sold such as the electronic camera 10, to which a recording medium such as a floppy disk or a CD-ROM is attached which has the button identification information recorded thereon ((3) in Fig. 6). Alternatively, the product with a notice, seal, or the like attached thereto and containing the button identification information may be delivered to the user.

Here, if the recording medium having the design of the shop service button 29 or the like recorded thereon is delivered to the user, a third person other than the service centers 38 and 20 may improperly create data on the design and assign it to any of the instruction buttons 28 or the like of the image viewer. However, according to the present invention, in this case, only the button identification information is delivered to the user, only the users who have contracted with the service center 20 can display the instruction button 28 on the image viewer.

Then, the user installs the attached recording medium such as a floppy disk or CD-ROM in the user's personal computer 16, reads the recorded button identification information, and stores this information in the predetermined storage area managed by the image viewer. On the other hand, if the product has the notice, seal, or the like attached thereto and containing the button identification information, the user inputs this information to the personal computer 16 via the input device such as a keyboard or a bar code reader to store it in the predetermined storage area managed by the image viewer.

On the personal computer 16, having the button identification information stored in the predetermined area, when the image viewer software is activated, it checks the predetermined storage area managed by itself to determine whether or not one or more pieces of button identification information are stored. If the button identification information is not stored in the personal computer, the instruction buttons 28 and others are displayed in a default form or in the same manner as in the last display.

On the other hand, if the button identification information is stored in the personal computer, when the personal computer starts to connect to the service center 20, it transmits the stored button identification information to the service center 20 ((4) in Fig. 6). At this time, the image viewer software provides a display such as the one shown in Fig. 3, but since it has not obtained the information on the design of the shop service button 29 for the service center 38 yet, other default instruction buttons 28 and others are displayed.

Upon receiving the button identification information, the service center 20 (menu management server) transmits the data on the design of the shop service button 29 or the like based on the contract to the user's personal computer 16, the data having been obtained from the service center 38 ((5) in Fig. 6). In this case, the service center 20 transmits the design data corresponding to the button identification information received from the personal computer 16.

The image viewer software of the personal computer 16, having received the design data on the shop service button 29 or the like, inserts the received design data into a predetermined area before display to customize the display screen. Information on the area into which the design data is inserted may be received from the service center 20 together with the design data or may be retained in the image viewer software. Once the customized menu is displayed, the design data is stored in the storage area in which the button identification information is stored, with the storage area imparted with a mark indicating that the identification number is proper.

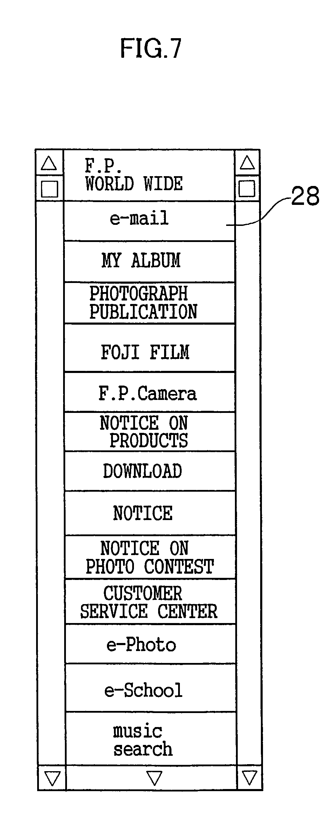

Fig. 7 shows an arrangement of the instruction buttons 28 displayed on the image viewer in their initial state.

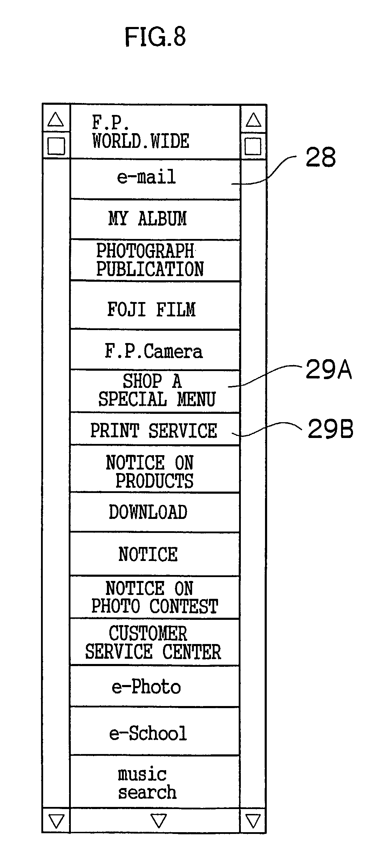

Further, Fig. 8 shows the arrangement of the instruction buttons 28 displayed on the image viewer after customization. As shown in this figure, the image viewer after customization displays additionally inserted shop service buttons 29A and 29B.

As shown in Figs. 7 and 8, by adding the shop service button 29A or 29B or the like obtained from the service center 20 on the basis of the button identification information obtained from the service center 38, the instruction buttons 28 of the image viewer can be surely customized while preventing improper operations.

Then, an explanation will be given of the process in which the user operates the shop service button 29 to enjoy a service from the service center 38.

The user selects images to be serviced or the like and performs desired operations such as clicking of the shop service button 29 to instruct a service such as image printing to be executed. Then, as shown in Fig. 6, information on the user selected images and button selection information on the shop service button 29 are transmitted to the service center 38, and the button selection information is also transmitted to the service center 20 ((6) in Fig. 6).

At this time, in addition to the button selection information, identification information identifying the image viewer software or user information registered in the service center 20 may be transmitted to the service center 38. In this regard, if the selected shop service button 29 is not an additional one provided through customization, the identification information identifying the image viewer software or the user information registered in the service center 20 need not be transmitted to the service center 38. Further, in this case, the button selection information need not be transmitted to the service center 20.

When the image viewer software communicates with the service center 20, if the storage area in which the button identification information is stored has the mark attached thereto and indicating that the identification number is proper, the software may notify the service center 20 of this so that the service center 20 can determine that the user has properly customized image viewer software.

Then, when the user places an order for an image service or the like with the service center 20, the service center 20 can determine that the user has image viewer software properly customized on the basis of the button identification information from the service center 38, to notify the service center 38 of this in order to cause it to provide an image service or the like at a special price.

Further, the service center 20 can execute a business process such as the charging of the usage of the service menu to the service center 38 by adding up the usage of the menu by one or more users.

Furthermore, the area managed by the image viewer and having the button identification stored therein has associated information so that the stored associated information can be transmitted to the service center 38 indicated by the button identification information when the image viewer connects to the service center 38 for communication. When the service center 38 receives the associated information from one or more users and if plural pieces of customized image viewer software with the different pieces of associated information are provided to different types of users, then one server can distinguish between the plural types of users to execute proper processes.

As described above, the particular-information displaying method according to the present invention comprises the steps of causing the user's communication device to transmit the particular identification information to the first server, causing the first server to transmit the image of the service button or banner advertisement corresponding to the received particular identification information to the user's communication device, causing the user's communication device to receive the image data, and causing the user's communication device to display the received image of the service button or banner advertisement on the image viewer displayed on the display device, thereby enabling software such as the image viewer to be easily and reliably customized.

Further, it is possible to preclude the software such as the image viewer from being customized without a prior contact or the like.

Further, this mechanism can be used to provide various useful services.

Now, a preferred embodiment of the menu service method and system according to the present invention will be described.

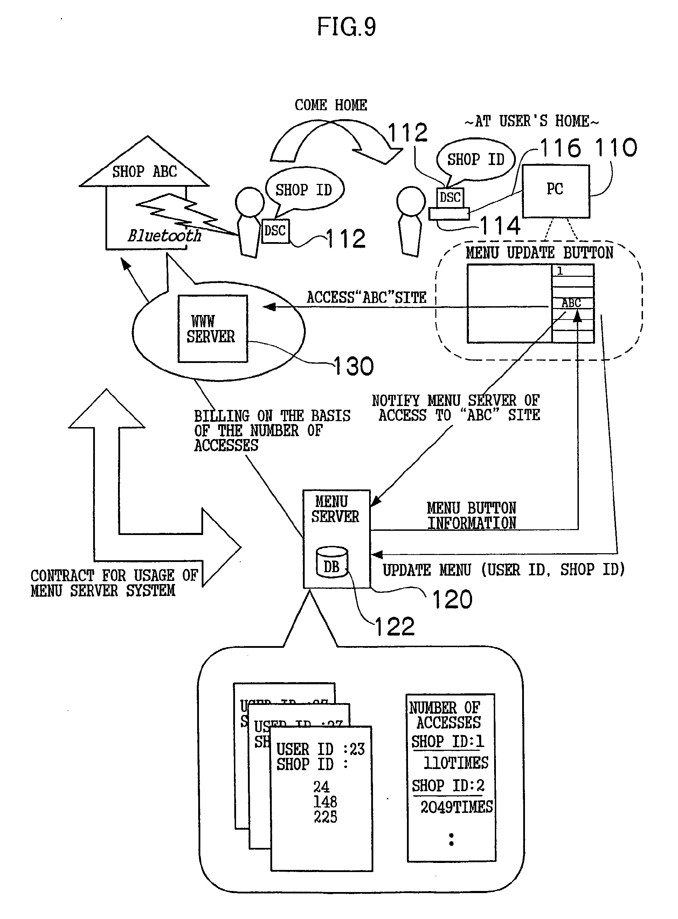

Fig. 9 is a schematic view of the menu service system according to the present invention. The menu service system shown in this figure is mainly composed of a client computer 110 having a client application (in this embodiment, the image viewer software, which lists the images in a digital camera) installed therein, and a menu server 120 of the menu server operation company.

The client computer 110 can transmit and receive information such as images to and from the digital camera 112 via a camera cradle 114 and a USB cable 116. It can also use URLs to specify the address of a service server (WWW server) 130 of a desired service company on the Internet and transmit images, sounds, or other information to the service server 130 to receive a service from the service company.

Further, when the digital camera 112 is installed in the camera cradle 114, the client computer 110 automatically detects (using the plug & play function) connection to the digital camera 112 and automatically activates the image viewer, a client application listing the images in the digital camera 112.

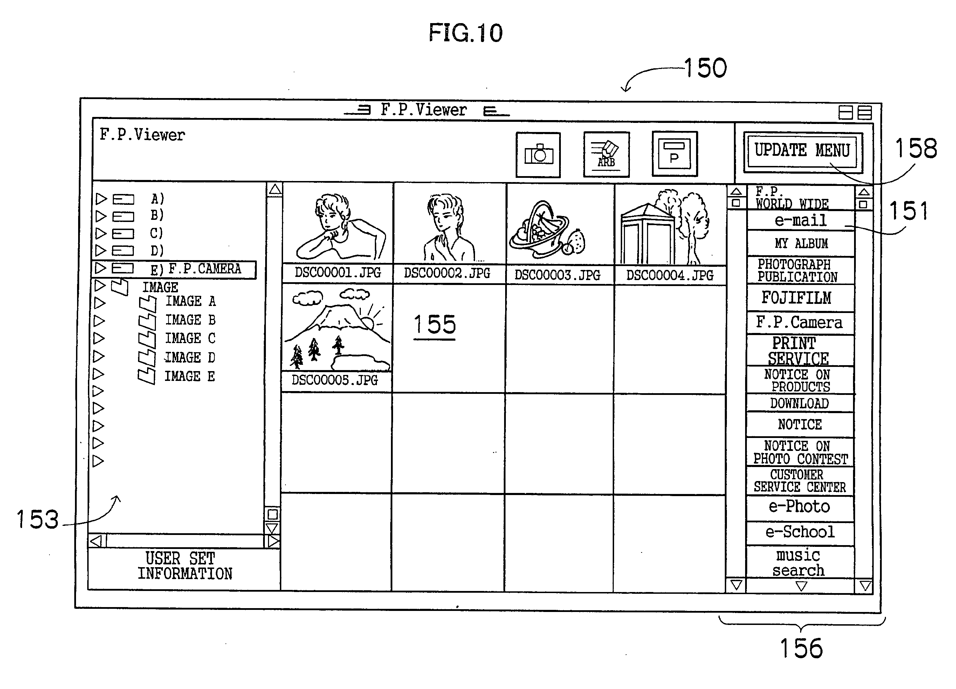

Fig. 10 is a view showing a display screen of the image viewer displayed on a display of the client computer 110.

A display screen 150 displayed by the image viewer has a file list display section 153 that displays a folder structure, an image list display section 155 that lists thumbnail images 154 of the images stored in a user specified folder, and a menu display section 156 that lists menu buttons 151 for various services.

The menu buttons 151 are link buttons for connections to the corresponding service servers 130 and include service selection buttons such as a print service button, a photo CD creation service button, a photograph publication button, a photo contest contribution button, an auction site selection button, a cellular telephone display button, and an Internet shopping site selection button.

The user can transmit information such as images required for an order for a print service or upload image or sound files for a photo CD creation service, a service for publishing photographs on the Internet, or a contribution to a photo contest, simply by using an input device (not shown) typified by a pointing device such as a mouse or by a keyboard to select one or more images from a list of file names displayed in the file list display section 153 or of thumbnail images 154 displayed in the image list display section 155, and clicking the desired menu button 151.

Further, the image viewer 150 is provided with a menu update button 158 which the user can click as required to access the menu server 120 to obtain the latest menu button information. The obtainment of the menu button information will be described below in detail.

Now, an explanation will be given of a method by which the client computer 110 obtains menu button information customized for each user, from the menu server 120.

In Fig. 9, the menu server operation company administering the menu server 120 contracts with service companies such as corporations or shops running WWW sites (for example, the shop "ABC" in Fig. 9) to allow them to utilize the menu service system. On the basis of this contract, the menu server operation company issues unique identification information (hereinafter referred to as a "shop ID") to each service company and registers menu button information (the shop ID, the URL of a WWW site, a button image, and the like) corresponding to the shop ID in a database 122 of the menu server 120.

On the other hand, the shop "ABC" has a Bluetooth-conforming short-distance radio communication device installed therein and transmitting the shop ID registered in the menu server 120, by radio, and the digital camera 112 is also provided with a Bluetooth-conforming short-distance radio communication device.

As shown in Fig. 9, when the user visits the shop "ABC" carrying the digital camera 112 with him or her and the camera 112 enters the service area of the radio communication device installed in the shop "ABC", both radio communication devices automatically start radio communication, and the shop ID is input to the digital camera 112. In this manner, when the user visits the service company carrying the digital camera 112 with him or her, the shop ID is automatically input to the digital camera 112 though the user is unconscious of this.

Subsequently, when the user comes home, installs digital camera 112 with the shop ID input thereto, in the camera cradle 114, and turns on power to the client computer 110, the image viewer, the client application listing the images in the digital camera 112, is automatically activated as described previously. Then, the display of the client computer 110 displays the image viewer shown in Fig. 10.

Then, when the user clicks the menu update button 158, the menu server 120 is accessed, and the client computer 110 transmits a menu update request and the user ID to the menu server 120. Further, the shop ID is read from the digital camera 112 and is simultaneously transmitted to the menu server 120.

The menu server 120 manages shop IDs for individual users (user IDs) as a database, and additionally registers the shop ID received as described above, in the database. The menu server 120 manages menu button information correspondingly to the shop IDs as described above. The menu server 120 reads out, from the database, the menu button information corresponding to the shop ID managed on the basis of the user ID and transmits this information to the client computer 110.

The client computer 110 downloads the menu button information, displays button images in the menu display section 156 of the image viewer 150 on the basis of the downloaded menu button information, and saves the downloaded menu button information to the storage area in the computer. This serves to update the list of menu buttons 151 in the image viewer 150 of the client computer 110.

When the viewer depresses a desired one of the menu buttons 151 listed in the image viewer 150, the image viewer 150 connects to the service server of the service company using the access method and URL contained in the menu button information (for example, a WWW browser is activated and the URL of the service server contained in the menu button information is passed). Thus, the user can access the service server of the desired service company to enjoy a service from the service company.

Further, when the menu button is operated to access the service server of the service company, the client computer 110 notifies the menu server 120 of the shop ID of the service company operating the service server as well as the user ID and requests the number of accesses to be counted.

The menu server 120 manages the number of accesses to each service company (shop ID). Upon receiving the request for the counting of the number of accesses to the service company, from the client computer 110, the menu server 120 adds up the number of accesses to the corresponding service company.

Then, the menu server 120 bills each service company on the basis of the number of accesses added up for the service company. The service company can pay the charge by electronic settlement or bank transfer or on delivery.

In this manner, service companies such as corporations or shops running WWW sites can efficiently guide users who have visited the shop at least once, to their WWW sites, thereby achieving efficient marketing for users who have visited the shop. This also enables the user to easily access the WWW site of an actually visited shop, thereby simplifying conventional retrieval operations and link tracing operations. Further, menu server operation companies can make profits by billing service companies desiring to register their menu buttons therewith on the basis of the number of accesses.

In the above embodiment, the shop ID of the service company is obtained via the user owned digital camera 112. However, the present invention is not limited to this aspect, but the ID of the service company may be obtained via a portable terminal such as a personal digital assistant (PDA) or a cellular telephone. Further, in the above embodiment, the shop ID of the service company is automatically input to the portable terminal of the user who has visited the shop or a certain location, using Bluetooth-conforming short-distance radio communication. However, the present invention is not limited to this aspect, but if the user's portable terminal can be electrically connected to a terminal installed in the shop of the service company to load the shop ID of the service company therein or to allow the shop ID to be manually input thereto, the shop ID shown on a notice or handbill in the shop of the service company may be manually loaded in the portable terminal. Furthermore, the client application may have a function of allowing the shop ID to be manually input to the portable terminal.

Further, in the above embodiment, when the menu update button 158 of the image viewer 150 is depressed, the shop ID loaded in the portable terminal (digital camera 110) is read and transmitted to the menu server 120. However, if the portable terminal has a function of communicating directly with the menu server 120, it may directly accesses the menu server 120 to notify the server 120 of the user ID and the shop ID.

Furthermore, the client application is not limited to the image viewer, but may be a rancher having a menu display section that lists menu buttons for various services.

Moreover, in the above embodiment, the menu server operation company bills service companies desiring to register menu buttons on the basis of the number of accesses, but alternatively or simultaneously, the registration of the menu buttons may be charged to these service companies every month or year or at another time interval.

As described above, according to the present invention, the user transmits the identification information on the service company to the menu server so as to obtain the menu button information for the service company from the menu server and operate the menu buttons displayed on the display in accordance with the menu button information to access the service server of the service company. Consequently, service companies such as corporations or shops running WWW sites can efficiently guide target users to their WWW sites, thereby achieving efficient marketing. This also enables the user to easily access the WWW site of an actually visited shop, thereby simplifying conventional retrieval operations and link tracing operations. Further, menu server operation companies can make profits by billing service companies desiring to register their menu buttons therewith.

It should be understood, however, that there is no intention to limit the invention to the specific forms disclosed, but on the contrary, the invention is to cover all modifications, alternate constructions and equivalents falling within the spirit and scope of the invention as expressed in the appended claims.

## Claims

1. A particular-information displaying method of receiving image data on a service button (28) or banner advertisement from a first server (20) and displaying the image data on a user's communication device (16), the service button (28) or banner advertisement allowing the user to instruct any of various services such as image printing and image or sound uploading to be carried out, the method comprising the steps of:
causing the user's communication device (16) to transmit particular identification information to a first server (20), the information being used to display, on a display device (22) of the user's communication device (16), the service button (28) or banner advertisement instructing a particular service to be carried out;
causing the first server (20) to transmit image data on the service button (28) or banner advertisement corresponding to the particular identification information to the user's communication device (16) upon receiving the particular identification information from the user's communication device (16);
causing the user's communication device (16) to receive the image data on the service button (28) or banner advertisement from the first server (20); and
causing the user's communication device (16) to display an image of the service button (28) or banner advertisement on an image viewer displayed on the display device (22), on the basis of the received image data on the service button (28) or banner advertisement.

2. The particular-information displaying method according to claim 1, further comprising the step of transmitting, when the user has selected the service button (28), button selection information to the first server (20), the button selection information indicating that the service button (28) has been selected, and also transmitting the button selection information to a second server (38) which provides a selected service.

3. The particular-information displaying method according to claim 1 or 2, further comprising the step of transmitting the particular identification information from the second server (38) to the user's communication device (16) via a recording medium such as a floppy disk or a CD-ROM.

4. The particular-information displaying method according to claim 1, 2 or 3, further comprising the step of causing the first server (20) to issue and transmit the particular identification information to the second server (38).

5. The particular-information displaying method according to any of claims 1 to 4, further comprising the step of causing the second server (38) to issue and transmit the image data on the service button (28) or banner advertisement to the first server (20).

6. A menu service method, comprising the steps of:
causing a user's portable terminal (112) and/or a client computer (110) to transmit identification information on a service company to a menu server (120);
causing the menu server (120) to transmit menu button information corresponding to the received identification information on the service company, to the client computer (110);
causing the client computer (110), which has received the menu button information, to display menu buttons (151) on a display (150) in accordance with the menu button information on the basis of a predetermined client application so as to access a service server (130) of the corresponding service company on the basis of operation of the menu buttons (151); and
causing a menu server operation company administering the menu server (120) to bill the service company.

7. The menu service method according to claim 6, further comprising the steps of:
causing the client computer (110) to transmit a request for counting of the number of accesses to the service company corresponding to the menu buttons (151), to the menu server (120) on the basis of operation of the menu buttons (151);
each time when the menu server (120) receives the request for the counting of the number of accesses to the service company, from the client computer (110), causing the menu server (120) to count up the number of accesses to the service company; and
causing the menu server operation company to bill the service company on the basis of the number of accesses.

8. The menu service method according to claim 6 or 7, wherein the identification information on the service company is transmitted from the service company's communication device to the user's portable terminal (112) by short-distance radio communication, and is transmitted from the portable terminal (112) to the menu server (120) directly or via the client computer (110).

9. The menu service method according to claim 6 or 7, wherein the identification information on the service company is manually input using an input device of the user's portable terminal (112) and transmitted directly to the menu server (120) using a communication function of the portable terminal (112).

10. The menu service method according to claim 6 or 7, wherein the identification information on the service company is manually input using an input device of the client computer (110) and transmitted from the client computer (110) to the menu server (120).

11. The menu service method according to claim 6, 7, 8, or 10, wherein when a menu update button (158) displayed on the display (150) is operated on the basis of the client application, the client computer (110) transmits the identification information on the service company to the menu server (120).

12. The menu service method according to any of claims 6 to 11, wherein the menu server (120) administers, for each user, menu button information corresponding to the identification information on the service company, and when the menu update button (158) displayed on the display (150) is operated on the basis of the client application to receive a menu update request together with the user's identification information, the menu server (120) transmits menu button information corresponding to the user to the user's client computer (110).

13. A menu service system, comprising:
a client computer (110); and
a menu server (120) of a menu server operation company, wherein:
the client computer (110) has a function of transmitting identification information of a service company input manually or from a portable terminal (112) on the basis of a predetermined client application, to the menu server (120), a function of displaying menu buttons (151) on a display (150) on the basis of the menu button information received from the menu server (120), a function of accessing a service server (130) of a corresponding service company on the basis of operation of the menu buttons (151) displayed on the display (150), and a function of notifying the service server (130) of the service company of the identification information on the service company upon each access to the service server (130) of the service company,
the menu server (120) has a function of transmitting, to the client computer (110), menu button information corresponding to the identification information on the service company received from the client computer (110), a function of counting the number of access notifications from the client computer (110) for each service company to manage the number of accesses, and
the menu server operation company administering the menu server (120) bills the service company on the basis of the number of accesses.

14. The menu service system according to claim 13, wherein the portable terminal (112) has a radio communication function of executing short-distance radio communication with communication device of the service company to receive the identification information on the service company, and a function of inputting the received identification information on the service company to the client computer (110).

15. The menu service system according to claim 13 or 14, wherein when a menu update button (158) displayed on the display (150) is operated on the basis of the client application, the client computer (110) transmits the identification information on the service company, user identification information, and a menu update request to the menu server (120).

16. The menu service system according to claim 15, wherein the menu server (120) has a function of managing, for each user, the menu button information corresponding to the identification information on the service company, and upon receiving the user identification information and the menu update request, transmits menu button information corresponding to the user, to the user's client computer (110).
